# EUROPEAN PATENT APPLICATION

(11) **EP 4 597 319 A1**
(43) Date of publication of application: **06.08.2025**
(21) Application number: 25154578.6
(22) Date of filing: 29.01.2025
(51) Int. Cl.: G06F 9/50, G06N 3/063, G06N 20/00

(54) **ON-DEVICE ARTIFICIAL INTELLIGENCE PROCESSING DISTRIBUTED PROCESSING DEVICE AND METHOD**

(30) Priority: 02.02.2024 KR 20240016657; 14.05.2024 KR 20240062982
(71) Applicant: LX Semicon Co., Ltd., Daejeon 34027 (KR)
(72) Inventor: LEE, Yun Tae, 34027 Daejeon (KR)
(74) Representative: Goddar, Heinz J.

(57) **Abstract**

An on-device artificial intelligence (AI) processing distributed processing device and method capable of distributing AI processing load of a terminal through internal or external other devices are provided. The on-device AI processing distributed processing device can, measure an amount of AI processing for performing the user command, select an AI processing distributed processing target when the measured amount of AI processing exceeds a self-processing capacity, request distributed process for AI processing to the selected AI processing distributed processing target, and when a first AI processing result value is received from the AI processing distributed processing target, provide a final result value based on the first AI processing result value and a self-processed second AI processing result value.

## Description

### [Technical field]

The present disclosure relates to an on-device artificial intelligence (Al) processing distributed processing device and method that can distribute and process a load of AI processing of a terminal through other internal or external devices.

### [Related Art]

In general, artificial intelligence (Al) is a field of computer engineering and information technology that studies methods for enabling computers to perform thinking, learning, self-development, etc. that can be performed by human intelligence, and means enabling computers to imitate human intelligent behavior.

In addition, AI does not exist by itself, but is directly or indirectly related to other fields of computer science. In particular, in modern times, attempts are being made to introduce AI elements into various fields of information technology and utilize them to solve problems in those fields.

Meanwhile, technologies that use AI to recognize and learn the surrounding situation, provide the information that the user wants in a desired form, or perform the actions or functions that the user wants are being actively studied.

And, electronic devices that provide these various actions and functions can be called AI devices.

Recently, on-device AI that can process information on the terminal device itself without having to connect to a server or cloud has been attracting attention.

On-device AI has the advantage of being fast and advantageous in terms of privacy protection and cost because it processes AI operations on the terminal device owned by the user without sending data to a server or cloud.

However, there was a problem that the results processed through on-device AI had limitations in terms of completeness compared to the results processed through AI processing on a server or cloud.

For example, on-device AI had a problem that the processing results were inaccurate or could not be provided when performing real-time translation in a noisy environment or performing real-time translation of long texts.

Therefore, in the future, it is necessary to develop on-device AI processing technology that can improve an AI processing speed and accuracy of results of a terminal.

### [Contents of the invention]

### [Technical Object]

An object of the present disclosure is to solve the above-mentioned problems and other problems.

The present disclosure is to provide an on-device artificial intelligence (Al) processing distributed processing device and method that can improve the AI processing speed and accuracy of a result value of a terminal by selecting an AI processing distributed processing target located externally or internally and requesting distributed processing of AI processing when an amount of AI processing for performing a user command exceeds the amount capable of being self-processed by the device.

### [Technical Solution]

An on-device AI processing distributed processing device according to one embodiment of the present disclosure can include an input module into which a user command is input; and a processor configured to perform AI processing corresponding to the user command, wherein, when the user command is input, the processor is configured to measure an amount of AI processing for performing the user command, select an AI processing distributed processing target when the measured amount of AI processing exceeds a self-processing capacity, request distributed process for AI processing to the selected AI processing distributed processing target, and when a firstAl processing result value is received from the AI processing distributed processing target, provide a final result value based on the first AI processing result value and a self-processed second AI processing result value.

An AI processing device according to one embodiment of the present disclosure is an AI processing device that is detachable from an on-device AI processing distributed processing device, and can include a communication module being communicatively connected to the on-device AI processing distributed processing device; a memory storing at least one AI model for AI processing; and a processor configured to perform AI processing corresponding to a distributed processing request of the on-device AI processing distributed processing device, wherein, when the AI processing device is mounted on the on-device AI processing distributed processing device, the processor is configured to perform a communication connection with the on-device AI processing distributed processing device, when the AI processing device is connected with the on-device AI processing distributed processing device, check whether a distributed processing request is input from the on-device AI processing distributed processing device, extract distributed processing information from the distributed processing request when the distributed processing request is input from the on-device AI processing distributed processing device, generate an AI processing result value by performing AI processing based on the distributed processing information, and provide the generated AI processing result value to the on-device AI processing distributed processing device. The AI processing device as disclosed herein may be provided so as to be detachable from the on-device AI processing distributed processing device as disclosed herein.

An AI processing distributed processing system according to one embodiment of the present disclosure is an AI processing distributed processing system including an AI processing device that is detachable from an on-device AI processing distributed processing device, and can include the on-device AI processing distributed processing device configured to perform AI processing corresponding to a user command; and the AI processing device configured to perform AI processing in response to a distributed processing request of the on-device AI processing distributed processing device, wherein, when the user command is input, the on-device AI processing distributed processing device is configured to measure an amount of AI processing for performing the user command, select an AI processing distributed processing target when the measured amount of AI processing exceeds a self-processing capacity, request for distributed procession for AI processing to the selected AI processing distributed processing target, and when a first AI processing result value is received from the AI processing distributed processing target, provide a final result value based on the first AI processing result value and a self-processed second AI processing result value. The AI processing distributed processing system may be provided so as to be detachable from the on-device AI processing distributed processing device as disclosed herein.

The AI processing distributed processing method of the on-device AI processing distributed processing device according to one embodiment of the present disclosure can include checking whether a user command is input; measuring an amount of AI processing for performing the user command when the user command is input; selecting an AI processing distributed processing target when the measured amount of AI processing exceeds a self-processing capacity; requesting distributed process for AI processing to the selected AI processing distributed processing target; self-processing AI processing for the amount capable of self-processing among the amount of the AI processing; receiving a first AI processing result value from the AI processing distributed processing target; and providing a final result value based on the received first AI processing result value and a self-processed second AI processing result. The AI processing distributed processing method as disclosed herein may be suited or configured to be carried out with the on-device AI processing distributed processing device as disclosed herein.

A method for AI processing distributed processing of an AI processing device detachable from an on-device AI processing distributed processing device according to one embodiment of the present disclosure can include checking whether the AI processing device is mounted on the on-device AI processing distributed processing device, performing a communication connection with the on-device AI processing distributed processing device when the AI processing device is mounted on the on-device AI processing distributed processing device, checking whether a distributed processing request is input from the on-device AI processing distributed processing device when connected with the on-device AI processing distributed processing device, extracting distributed processing information from the distributed processing request when the distributed processing request is input from the on-device AI processing distributed processing device, generate an AI processing result value by performing AI processing based on the distributed processing information, and providing the generated AI processing result value to the on-device AI processing distributed processing device. The method for AI processing distributed processing of an AI processing device detachable from an on-device AI processing distributed processing device may be suited or configured to be carried out with the AI processing device as disclosed herein, which may be detachable from the on-device AI processing distributed processing device as disclosed herein.

### [Effects of the invention]

According to one embodiment of the present disclosure, when the amount of AI processing for performing a user command exceeds its own processing capacity, the on-device AI processing distributed processing device selects an AI processing distributed processing target located externally or internally and requests AI processing to be distributed, thereby improving the AI processing processing speed of the terminal and the accuracy of the result value and the service quality.

In addition, the present disclosure can minimize the power consumption of the terminal and reduce heat generation to improve performance and lifespan by distributing AI processing together with an AI processing distributed processing target located externally or internally.

### [Brief Description of Drawings]

FIG. 1 illustrates an artificial intelligence device according to an embodiment of the present disclosure.
FIG. 2 illustrates an artificial intelligence server according to an embodiment of the present disclosure.
FIG. 3 illustrates an artificial intelligence system according to an embodiment of the present disclosure.
FIG. 4 is a drawing for explaining an on-device AI processing distributed processing system according to an embodiment of the present disclosure.
FIG. 5 is a drawing for explaining an on-device AI processing distributed processing device according to an embodiment of the present disclosure.
FIG. 6 and FIG. 7 are drawings for explaining a process of measuring an AI processing amount of an on-device AI processing distributed processing device according to an embodiment of the present disclosure.
FIG. 8 and FIG. 9 are drawings for explaining a communication connection process between an on-device AI processing distributed processing device and an external device according to an embodiment of the present disclosure.
FIG. 10 and FIG. 11 are diagrams for explaining an AI processing distributed processing target selection process of an on-device AI processing distributed processing device according to an embodiment of the present disclosure.
FIG. 12 and FIG. 13 are diagrams for explaining a notification provision process of an on-device AI processing distributed processing device according to an embodiment of the present disclosure.
FIG. 14 is a diagram for explaining an AI processing distributed processing method of an on-device AI processing distributed processing device according to an embodiment of the present disclosure.
FIG. 15 is a diagram for explaining an AI processing distributed processing method of an AI processing device detachable from an on-device AI processing distributed processing device according to an embodiment of the present disclosure.
FIG. 16 is a diagram for explaining an overall operation flow of an on-device AI processing distributed processing system according to an embodiment of the present disclosure.

### [Detailed description]

Hereinafter, the embodiments disclosed in this specification will be described in detail with reference to the attached drawings. Regardless of the drawing symbols, identical or similar components will be given the same reference numbers and redundant descriptions thereof will be omitted. The suffixes "module" and "part" used for components in the following description are given or used interchangeably only for the convenience of writing the specification, and do not have distinct meanings or roles in themselves. In addition, when describing the embodiments disclosed in this specification, if it is determined that a specific description of a related known technology may obscure the gist of the embodiments disclosed in this specification, the detailed description thereof will be omitted. In addition, the attached drawings are only intended to facilitate easy understanding of the embodiments disclosed in this specification, and the technical ideas disclosed in this specification are not limited by the attached drawings, and should be understood to include all modifications, equivalents, and substitutes included in the ideas and technical scope of the present disclosure.

Terms including ordinal numbers such as first, second, etc. may be used to describe various components, but the components are not limited by the terms. The terms are used only for the purpose of distinguishing one component from another.

When a component is referred to as being "connected" or "connected" to another component, it should be understood that it may be directly connected or connected to that other component, but there may be other components in between. On the other hand, when a component is referred to as being "directly connected" or "directly connected" to another component, it should be understood that there are no other components in between.

Also, throughout this specification, the terms neural network, neural network, and network function may be used interchangeably. A neural network may be composed of a set of interconnected computational units, which may generally be referred to as "nodes." These "nodes" may also be referred to as "neurons." A neural network is composed of at least two or more nodes. Nodes (or neurons) constituting neural networks may be interconnected by one or more "links."

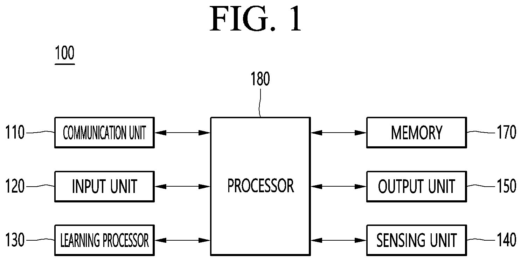

FIG. 1 illustrates an AI device 100 according to an embodiment of the present disclosure.

The AI device 100 may be implemented as a fixed or movable device, such as a TV, a projector, a mobile phone, a smart phone, a desktop computer, a laptop, a digital broadcasting terminal, a personal digital assistant (PDA), a portable multimedia player (PMP), a navigation device, a tablet PC, a wearable device, a set-top box (STB), a digital multimedia broadcasting (DMB) receiver, a radio, a washing machine, a refrigerator, a desktop computer, a digital signage, a robot, a vehicle, etc.

Referring to FIG. 1, the AI device 100 may include a communication unit 110, an input unit 120, a learning processor 130, a sensing unit 140, an output unit 150, a memory 170, and a processor 180.

The communication unit 110 can transmit and receive data with external devices such as other AI devices 100a to 100e or AI servers 200 using wired and wireless communication technology. For example, the communication unit 110 can transmit and receive sensor information, user input, learning models, control signals, etc. with external devices.

At this time, the communication technologies used by the communication unit 110 include Global System for Mobile communication (GSM), Code Division Multi Access (CDMA), Long Term Evolution (LTE), 5G, Wireless LAN (WLAN), Wireless-Fidelity (Wi-Fi), Bluetooth^{™}, Radio Frequency Identification (RFID), Infrared Data Association (IrDA), ZigBee, Near Field Communication (NFC), etc.

The input unit 120 can obtain various types of data.

At this time, the input unit 120 may include a camera for inputting a video signal, a microphone for receiving an audio signal, a user input unit for receiving information from a user, etc. Here, the camera or microphone may be treated as a sensor, and the signal obtained from the camera or microphone may be referred to as sensing data or sensor information.

The input unit 120 may obtain input data to be used when obtaining output using learning data for model learning and a learning model. The input unit 120 may obtain unprocessed input data, and in this case, the processor 180 or the learning processor 130 may extract input features as preprocessing for the input data.

The learning processor 130 may learn a model composed of an artificial neural network using learning data. Here, the learned artificial neural network may be referred to as a learning model. The learning model can be used to infer a result value for new input data that is not learning data, and the inferred value can be used as a basis for judgment to perform a certain action.

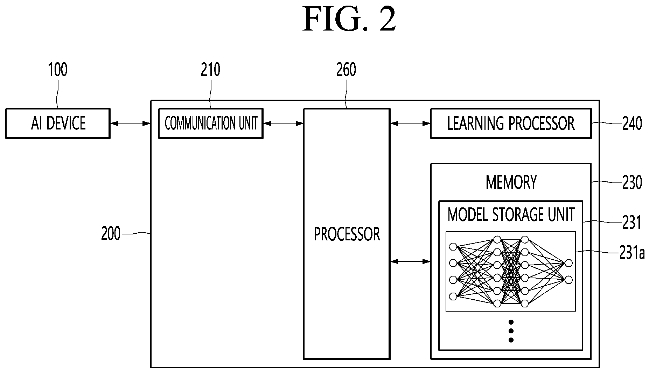

At this time, the learning processor 130 can perform AI processing together with the learning processor 240 of the AI server 200 of FIG. 2.

At this time, the learning processor 130 can include a memory integrated or implemented in the AI device 100. Alternatively, the learning processor 130 can be implemented using a memory 170, an external memory directly coupled to the AI device 100, or a memory maintained in an external device.

The sensing unit 140 can obtain at least one of internal information of the AI device 100, information about the surrounding environment of the AI device 100, and user information using various sensors.

At this time, the sensors included in the sensing unit 140 include proximity sensors, light sensors, acceleration sensors, magnetic sensors, gyro sensors, inertial sensors, RGB sensors, IR sensors, fingerprint recognition sensors, ultrasonic sensors, light sensors, microphones, lidar, radar, etc.

The output unit 150 can generate outputs related to vision, hearing, or touch.

At this time, the output unit 150 can include a display unit that outputs visual information, a speaker that outputs auditory information, a haptic module that outputs tactile information, etc.

The memory 170 can store data that supports various functions of the AI device 100. For example, the memory 170 can store input data, learning data, learning models, learning history, etc. acquired from the input unit 120.

The processor 180 may determine at least one executable operation of the AI device 100 based on information determined or generated using a data analysis algorithm or a machine learning algorithm. Then, the processor 180 may control the components of the AI device 100 to perform the determined operation.

To this end, the processor 180 may request, search, receive, or utilize data from the learning processor 130 or the memory 170, and control the components of the AI device 100 to perform a predicted operation or an operation determined to be desirable among the at least one executable operation.

At this time, the processor 180 may generate a control signal for controlling the external device if linkage with an external device is required to perform the determined operation, and transmit the generated control signal to the external device.

The processor 180 may obtain intention information for a user input, and determine the user's requirement based on the obtained intention information.

At this time, the processor 180 may obtain intention information corresponding to the user input by using at least one of a Speech To Text (STT) engine for converting voice input into a string or a natural language processing (NLP) engine for obtaining intention information of natural language.

At this time, at least one of the STT engine or the NLP engine may be configured with an artificial neural network that is at least partially learned according to a machine learning algorithm. In addition, at least one of the STT engine or the NLP engine may be learned by the learning processor 130, learned by the learning processor 240 of the AI server 200, or learned by distributed processing of these.

The processor 180 may collect history information including the operation content of the AI device 100 or the user's feedback on the operation, and store it in the memory 170 or the learning processor 130, or transmit it to an external device such as the AI server 200. The collected history information can be used to update the learning model.

The processor 180 can control at least some of the components of the AI device 100 to drive the application program stored in the memory 170. Furthermore, the processor 180 can operate two or more of the components included in the AI device 100 in combination with each other to drive the application program.

FIG. 2 illustrates an AI server 200 according to an embodiment of the present disclosure.

Referring to FIG. 2, the AI server 200 may mean a device that trains an artificial neural network using a machine learning algorithm or uses a trained artificial neural network. Here, the AI server 200 may be composed of multiple servers to perform distributed processing, and may be defined as a 5G network. At this time, the AI server 200 may be included as a part of the AI device 100 and may perform at least a part of the AI processing together.

The AI server 200 may include a communication unit 210, a memory 230, a learning processor 240, a processor 260, etc.

The communication unit 210 may transmit and receive data with an external device such as the AI device 100.

The memory 230 may include a model storage unit 231. The model storage unit 231 can store a model (or artificial neural network, 231a) being learned or learned through the learning processor 240.

The learning processor 240 can use learning data to learn the artificial neural network 231a. The learning model can be used while being installed in the AI server 200 of the artificial neural network, or can be used while being installed in an external device such as an AI device 100.

The learning model can be implemented by hardware, software, or a combination of hardware and software. If part or all of the learning model is implemented by software, one or more instructions constituting the learning model can be stored in the memory 230.

The processor 260 can infer a result value for new input data using the learning model, and generate a response or control command based on the inferred result value.

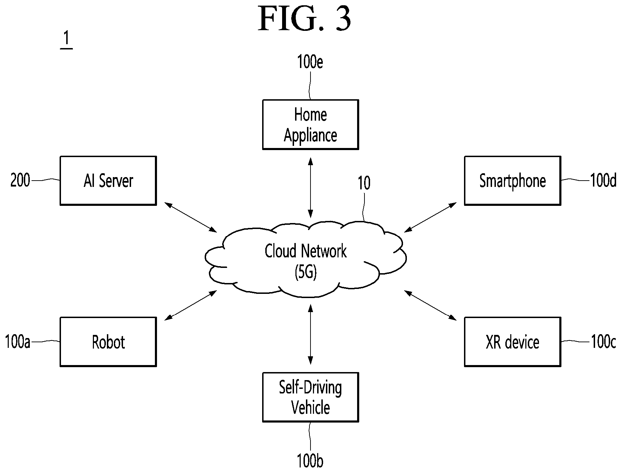

FIG. 3 illustrates an AI system 1 according to an embodiment of the present invention.

Referring to FIG. 3, the AI system 1 is connected to at least one of an AI server 200, a robot 100a, an autonomous vehicle 100b, an XR device 100c, a smartphone 100d, or an appliance 100e with a cloud network 10. Here, the robot 100a, the autonomous vehicle 100b, the XR device 100c, the smartphone 100d, or the appliance 100e to which AI technology is applied may be referred to as an AI device 100a to 100e.

The cloud network 10 may mean a network that constitutes part of a cloud computing infrastructure or exists within a cloud computing infrastructure. Here, the cloud network 10 may be configured using a 3G network, a 4G or LTE network, a 5G network, or the like.

That is, each device 100a to 100e, 200 constituting the AI system 1 can be connected to each other through the cloud network 10. In particular, each device 100a to 100e, 200 can communicate with each other through the base station, but can also communicate with each other directly without going through the base station.

The AI server 200 can include a server that performs AI processing and a server that performs calculations on big data.

The AI server 200 is connected to at least one or more of the AI devices constituting the AI system 1, such as a robot 100a, an autonomous vehicle 100b, an XR device 100c, a smartphone 100d, or a home appliance 100e, through the cloud network 10, and can assist at least a part of the AI processing of the connected AI devices 100a to 100e.

At this time, the AI server 200 can train an artificial neural network according to a machine learning algorithm on behalf of the AI device 100a to 100e, and can directly store the learning model or transmit it to the AI device 100a to 100e.

At this time, the AI server 200 can receive input data from the AI device 100a to 100e, infer a result value for the received input data using the learning model, and generate a response or control command based on the inferred result value and transmit it to the AI device 100a to 100e.

Alternatively, the AI device 100a to 100e can directly infer a result value for the input data using the learning model, and generate a response or control command based on the inferred result value.

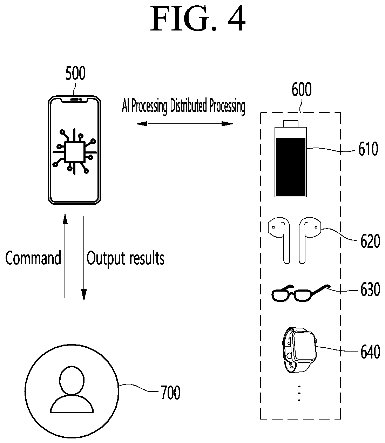

FIG. 4 is a diagram for explaining an on-device AI processing distributed processing system according to an embodiment of the present disclosure.

As illustrated in FIG. 4, the on-device AI processing distributed processing system of the present disclosure may include an on-device AI processing distributed processing device 500 that performs AI processing corresponding to a user command, and an AI processing device 600 that performs AI processing corresponding to a distributed processing request of the on-device AI processing distributed processing device 500.

Here, the on-device AI processing distributed processing device 500 is an artificial intelligence device capable of performing on-device AI processing, and may include all standing devices such as a Personal Computer (PC), a Network TV, a Hybrid Broadcast Broadband TV (HBBTV), a Smart TV, an Internet Protocol TV (IPTV), and the like, as well as mobile devices (or handheld devices) such as a Smart Phone, a Tablet PC, a Notebook, a PDA, a Smart Watch, a Smart Glass, and the like.

In addition, the AI processing device 600 may be an internal device or an external device of the on-device AI processing distributed processing device 500 as a target for distributed processing a portion of the excess AI processing amount of the on-device AI processing distributed processing device 500.

Here, the AI processing unit 600, which is an internal device of the on-device AI processing distributed processing unit 500, may be composed of one or more cores, and may include a processor for data analysis and deep learning, such as a neural network processing unit (NPU), a central processing unit (CPU), a general purpose graphics processing unit (GPGPU), and a tensor processing unit (TPU).

The processor of the AI processing unit 600 may read a computer program stored in a memory to perform data processing for machine learning, perform operations for neural network learning, and perform calculations for neural network learning, such as processing of input data for learning in deep learning (DL), feature extraction from input data, error calculation, and updating of neural network weights using backpropagation.

In addition, the AI processing device 600, which is an external device of the on-device AI processing distributed processing device 500, may include a battery pack 610, earphones 620, smart glasses 630, a smart watch 640, etc., in which at least one AI model is stored, and may additionally include various peripheral devices such as an external memory, a smart health band, an adapter, a GPS, a PDA, a barcode reader, a character recognition device, a voice recognition device, etc.

Here, the AI processing device 600, which is an external device, may be connected to the on-device AI processing distributed processing device 500 as a peripheral device, and may be connected to the on-device AI processing distributed processing device 500 by communication, or may be connected to the on-device AI processing distributed processing device by wire and wireless communication.

Meanwhile, the on-device AI processing distributed processing device 500 measures the amount of Al processing to perform the user command when a command is input from the user 700, checks whether the measured amount of AI processing exceeds the amount that can be processed by the user, and if the measured amount of AI processing exceeds the amount that can be processed by the user, the device can select an AI processing distributed processing target.

Here, the AI processing distributed processing target can be an AI processing device 600 that is an internal device or an external device.

Next, the on-device AI processing distributed processing device 500 can request AI processing distributed processing to the selected AI processing distributed processing target when at least one AI processing distributed processing target is selected among the AI processing distributed processing targets that are connected to the communication.

And, when the on-device AI processing distributed processing device 500 receives the first AI processing result value from the AI processing device 600 which is the target of AI processing distributed processing, the on-device AI processing distributed processing device 500 can generate the final result value based on the first AI processing result value and the second AI processing result value processed by itself and provide it to the user 700.

The on-device AI processing distributed processing device 500 can store at least one AI model and provide various service results through the pre-learned AI model in response to the user's 700 command.

Here, the AI model may be a deep neural network (DNN) and may be a neural network including multiple hidden layers in addition to the input layer and the output layer.

The AI model can identify latent structures of data such as photos, text, videos, voices, and music.

And, the AI processing device 600 may be mounted inside or outside the device AI processing distributed processing device 500 as an internal device or an external device of the AI processing distributed processing target 500.

When mounted on the device AI processing distributed processing device 500, the AI processing device 600 performs a communication connection with the on-device AI processing distributed processing device 500, and when connected to the communication with the on-device AI processing distributed processing device 500, it checks whether a distributed processing request is input from the on-device AI processing distributed processing device 500, and when a distributed processing request is input from the on-device AI processing distributed processing device 500, it extracts distributed processing information from the distributed processing request, performs AI processing based on the distributed processing information to generate an AI processing result value, and provides the generated AI processing result value to the on-device AI processing distributed processing device 500.

Here, the AI processing device 600 can store at least one AI model among the AI models pre-stored in the on-device AI processing distributed processing device 500.

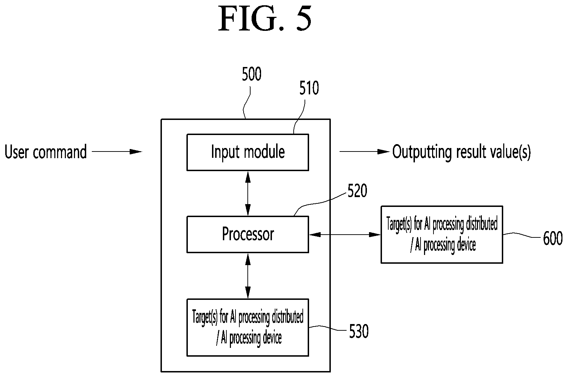

FIG. 5 is a diagram for explaining an on-device AI processing distributed processing device according to an embodiment of the present disclosure.

As illustrated in FIG. 5, the on-device AI processing distributed processing device 500 of the present disclosure may include an input unit 510 into which a user command is input, and a processor 520 that performs AI processing corresponding to the user command.

Here, when a user command is input, the processor 520 measures the amount of AI processing for performing the user command, and if the measured amount of AI processing exceeds the amount that can be processed by itself, selects an AI processing device 530, 600 that is an AI processing distributed processing target, and requests AI processing to be distributed to the selected AI processing distributed processing target, and when a first AI processing result value is received from the AI processing distributed processing target, the processor may provide a final result value based on the firstAl processing result value and the second AI processing result value that has been processed by itself.

When measuring the AI processing amount, the processor 520 may select at least one AI model to perform the user command when a user command is input, and measure the AI processing amount for performing the user command based on the computation amount of the selected AI model.

Here, the processor 520 may measure the AI processing amount based on the computation amount processed by one AI model if there is one selected AI model, and may measure the AI processing amount based on the total computation amount processed by the multiple AI models if there are multiple selected AI models.

As an example, the processor 520 may analyze the selected AI model to determine whether there is a branch point connecting one upper operator to multiple lower operators and a junction point joining multiple upper operators to one lower operator, and if there is a branch point and a junction point, determine whether there is at least one parallel processing part based on the branch point and the junction point, and if there is a parallel processing part, measure the AI processing amount based on the first computation amount for the parallel processing part and the second computation amount for the remaining part other than the parallel processing part.

And, when selecting an AI processing distributed processing target, the processor 520 checks whether the measured AI processing amount is a self-processable amount when the AI processing amount is measured, and if it is determined that the measured AI processing amount is a self-processable amount, it immediately performs AI processing corresponding to the user command, and if it is determined that the measured AI processing amount exceeds the self-processable amount, it can select an AI processing distributed processing target.

Here, when checking whether the measured AI processing amount is a self-processable amount, the processor 520 checks whether there is currently operating AI processing when the AI processing amount is measured, and if there is currently operating AI processing, it calculates the self-processable amount excluding the currently operating AI processing, and based on the calculated self-processable amount, it can check whether the measured AI processing amount is a self-processable amount.

In some cases, when checking whether the measured AI processing amount is a self-processing amount, the processor 520 can check whether a preset self-processing amount exists when the AI processing amount is measured, and if a preset self-processing amount exists, it can check whether the measured AI processing amount is a self-processing amount based on the preset self-processing amount.

For example, the preset self-processing amount can be a preset default value or a user value preset by the user.

In addition, when selecting an AI processing device 530, 600 that is a target of AI processing distribution, the processor 520 can check whether it is connected to an external device, and if the external device is connected, it can obtain identification information of the external device from the external device, and if the external device is an AI processing device 600 based on the identification information, and if the external device is an AI processing device 600, it can select the external device as a target of AI processing distribution.

For example, the on-device AI processing distributed processing device 500 of the present disclosure may further include a coupling unit that is coupled and communicatively connected with an external device.

Here, the processor 520 may maintain a communication connection with the external device when the external device is coupled to the coupling unit, and may release the communication connection with the external device when the external device is separated from the coupling unit.

For another example, the on-device AI processing distributed processing device 500 of the present disclosure may further include a communication unit that is wired or wirelessly communicatively connected with the external device.

Here, the processor 520 may check whether there is a communication connection with the external device through the communication unit.

That is, the external device may include an AI processing device 600 in which at least one AI model is stored.

For example, the AI processing device 600 of the external device may include at least one of a battery pack, earphones, external memory, a smart watch, smart glasses, a smart health band, an adapter, a Global Positioning System (GPS), a Personal Data Assistance (PDA), a barcode reader, a character recognition device, and a voice recognition device, in which at least one AI model is stored, but this is only an example and is not limited thereto.

In addition, when the processor 520 determines whether the external device is the AI processing device 600, it determines whether an AI model identifier exists in the identification information of the external device, and if the AI model identifier exists, it recognizes the external device as the AI processing device 600, and determines whether the device is capable of AI processing for a user command based on the AI model identifier.

Here, if the processor 520 does not have an AI model identifier in the identification information of the external device, it recognizes the external device as a general device, and generates and provides a user notification requesting replacement of the external device.

For example, the processor 520 may generate and output a user notification in at least one of a text form and a sound form.

In addition, if there are multiple external devices capable of AI processing, the processor 520 may select all of the multiple external devices as AI processing distribution processing targets, and may assign priorities to the multiple external devices based on processing performance indices of the multiple external devices selected as AI processing distribution processing targets.

Here, the processor 520 may assign the highest priority to the external device with the highest processing performance indices among the multiple external devices, and may assign the lowest priority to the external device with the lowest processing performance indices.

In addition, when the measured AI processing amount exceeds its own processing capacity, the processor 520 may check the processing capacity of the external devices for the excess amount, and if multiple external devices are required for the excess amount, may request processing of the excess amount according to the priorities assigned to the external devices.

Here, when requesting to process an excess amount, the processor 520 may request different excess amounts to be processed by multiple external devices.

For example, the processor 520 may request a first excess amount to be processed by a high priority external device, and may request a second excess amount, which is the remainder of the total excess amount after excluding the first excess amount, to be processed by a low priority external device.

In some cases, when requesting to process an excess amount, the processor 520 may request the same excess amount to be processed by multiple external devices.

For example, the processor 520 may equally distribute the total excess amount to multiple external devices, request the first excess amount to be processed by a high priority external device, and request the second excess amount, which is the same as the first excess amount, to be processed by a low priority external device.

Meanwhile, when checking whether or not the processor 520 is connected to an external device, if the external device is not connected, it checks whether an AI processing device 530, which is an internal device capable of AI processing, exists, and if an AI processing device 530, which is an internal device capable of AI processing, exists, it checks whether the AI processing device 530, which is an internal device capable of AI processing, is currently in a non-operational state, and if the AI processing device 530, which is an internal device capable of AI processing, is currently in a non-operational state, the AI processing device 530, which is an internal device capable of AI processing, can be selected as an AI processing distributed processing target.

Here, if there are multiple AI processing devices 530, which are internal devices capable of AI processing, the processor 520 can select all of the multiple internal devices as AI processing distributed processing targets, and can give priority to the multiple internal devices based on the processing performance indexes of the multiple internal devices selected as AI processing distributed processing targets.

For example, the processor 520 may assign the highest priority to an internal device with the highest processing performance index among multiple internal devices, and assign the lowest priority to an internal device with the lowest processing performance index.

In addition, when the measured AI processing amount exceeds its own processing capacity, the processor 520 may check the processing capacity of the internal devices for the excess amount, and if multiple internal devices are required for the excess amount, may request processing of the excess amount according to the priorities assigned to the internal devices.

Here, when requesting processing of the excess amount, the processor 520 may request different excess amounts to be processed to the multiple internal devices.

For example, the processor 520 may request processing of the first excess amount to an internal device with a high priority, and may request processing of the second excess amount, which is the remainder of the total excess amount excluding the first excess amount, to an internal device with a low priority.

In some cases, when the processor 520 requests processing of an excess amount, it may request processing of the same excess amount to multiple internal devices.

For example, the processor 520 may equally distribute the total excess amount to multiple internal devices, request the processing of the first excess amount to an internal device with a high priority, and request the processing of the second excess amount, which is the same as the first excess amount, to an internal device with a low priority.

In addition, when selecting an AI processing distributed processing target, the processor 520 may check whether an AI processing device 530, which is an internal device capable of AI processing, exists, and if an AI processing device 530, which is an internal device capable of AI processing, exists, check whether the AI processing device 530, which is an internal device capable of AI processing, is currently in a non-operating state, and if the internal device capable of AI processing is currently in a non-operating state, the AI processing device 530, which is an internal device capable of AI processing, may be selected as an AI processing distributed processing target.

Here, the processor 520 checks whether or not the first AI processing device 530, which is an internal device capable of AI processing, is connected to an external device if there is no such device, and if the external device is connected, obtains identification information of the external device from the external device, and if the external device is an AI processing device 600 based on the identification information, selects the external device as an AI processing distributed processing target.

Next, when requesting distributed processing of AI processing, the processor 520 calculates an excess amount in addition to its own processable amount among the measured AI processing amounts, checks the processable amount of the selected AI processing distributed processing target, and if the processable amount of the AI processing distributed processing target is greater than the excess amount, requests distributed processing of AI processing for the excess amount to the AI processing distributed processing target.

Here, if the processable amount of the AI processing distributed processing target is less than the excess amount, the processor 520 can additionally select another AI processing distributed processing target and request distributed processing of AI processing for the excess amount to multiple AI processing distributed processing targets.

Then, when requesting distributed processing of AI processing, the processor 520 calculates an excess amount in addition to the self-processable amount among the measured AI processing amount, extracts a distributed processing portion corresponding to the excess amount among AI processing for performing a user command, and requests distributed processing of AI processing for the extracted distributed processing portion for the selected AI processing distributed processing target.

As an example, when extracting a distributed processing portion corresponding to the excess amount, the processor 520 analyzes each AI model for performing a user command to check whether there is a branch point connecting one upper operator to multiple lower operators and a junction point joining multiple upper operators to one lower operator, and if there is a branch point and a junction point, it checks whether there is at least one parallel processing portion based on the branch point and the junction point, and extracts the parallel processing portion as the distributed processing portion.

As another example, when extracting a distributed processing portion corresponding to an excess amount, the processor 520 can check whether there are AI models among the multiple AI models that can be processed in parallel when performing a user command, and if there are AI models that can be processed in parallel, the processing portion performed by the AI models that can be processed in parallel can be extracted as a distributed processing portion.

Then, when requesting distributed processing of AI processing, the processor 520 can provide a distributed processing request including AI model information, location information, distributed processing amount information, and input data corresponding to the distributed processing portion to the AI processing distributed processing target.

Next, when providing a final result value, the processor 520 can map the first AI processing result value received from the AI processing distributed processing target and the second AI processing result value that has been processed by itself to each other to generate a final result value corresponding to the user command.

In this way, the on-device AI processing distributed processing device of the present disclosure can improve the AI processing processing speed and accuracy of the result value and the service quality of the terminal by selecting an AI processing distributed processing target located externally or internally and requesting AI processing for distributed processing when the amount of AI processing for performing a user command exceeds its own processing capacity.

In addition, the present disclosure can minimize the power consumption of the terminal and reduce heat generation to improve performance and lifespan by distributing AI processing with an AI processing distributed processing target located externally or internally.

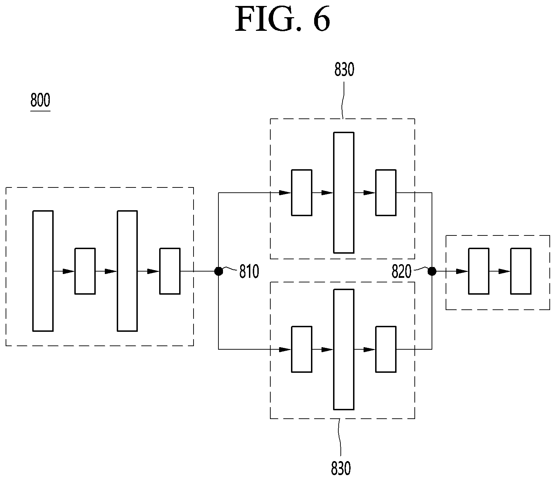

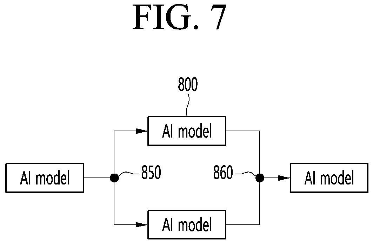

FIG. 6 and FIG. 7 are diagrams for explaining a process of measuring the AI processing amount of the on-device AI processing distributed processing device according to an embodiment of the present disclosure.

As illustrated in FIG. 6 and FIG. 7, the present disclosure can select at least one AI model 800 for performing a user command when a user command is input, and measure the AI processing amount for performing the user command based on the computational amount of the selected AI model 800.

As shown in FIG. 6, the present disclosure can measure the AI processing amount based on the amount of computation processed by one AI model 800 if there is one selected AI model 800.

That is, the present disclosure can analyze the selected AI model 800 to check whether there is a branch point 810 connecting one upper operator to multiple lower operators and a junction point 820 joining multiple upper operators to one lower operator.

In addition, the present disclosure can measure the AI processing amount based on the branch point 810 and the junction point 820 if there is a branch point 810 and a junction point 820, and if there is a parallel processing part 830, the first computation amount for the parallel processing part 830 and the second computation amount for the remaining part other than the parallel processing part.

Next, the present disclosure can determine whether to perform distributed processing for a parallel processing portion 830 of the total AI processing amount for one AI model when the amount of AI processing for performing a user command exceeds its own processing capacity.

As another example, as shown in FIG. 7, the present disclosure can measure the AI processing amount based on the total amount of computation processed by the plurality of AI models 800 if there are multiple selected AI models 800.

Here, the present disclosure analyzes the AI model group to check whether there is a branch point 850 connecting one upper AI model to multiple lower AI models and a junction point 860 joining multiple upper AI models to one lower AI model, and if there is a branch point 850 and a junction point 860, it checks whether there is at least one parallel processing part based on the branch point 850 and the junction point 860, and if there is a parallel processing part, the AI processing amount can be measured based on the first computation amount for the parallel processing part and the second computation amount for the remaining part other than the parallel processing part.

In addition, the present disclosure can determine whether to distribute processing for a parallel processing portion of the entire AI processing amount for an AI model group including multiple AI models when the AI processing amount for performing a user command exceeds its own processing capacity.

In addition, the present disclosure can determine whether there is a branch point connecting one upper operator to multiple lower operators and a junction point joining multiple upper operators to one lower operator for each AI model in the AI model group, and if there is a branch point and a junction point, it can determine whether there is at least one parallel processing portion based on the branch point and the junction point, and determine whether to distribute processing for the parallel processing portion.

In addition, the present disclosure can request distributed processing for a parallel processing portion between a branch point and a junction point within each AI model when selecting an AI processing distributed processing target in the future, or can request distributed processing for the entire processing portion performed by a parallel model between a branch point and a junction point within an AI model group as an AI processing distributed processing target.

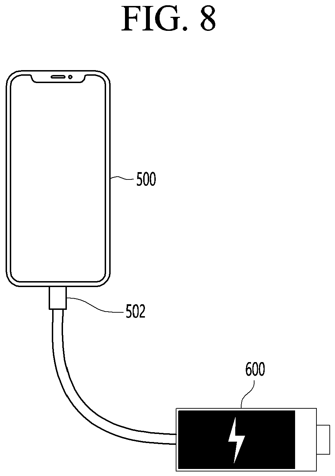

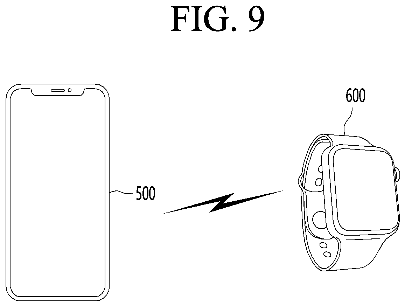

FIG. 8 and FIG. 9 are diagrams for explaining a communication connection process between an on-device AI processing distributed processing device and an external device according to an embodiment of the present disclosure.

As illustrated in FIG. 8 and FIG. 9, in the present disclosure, when selecting an AI processing distributed processing target as an AI processing device 600, which is an external device, the presence or absence of a connection with the external device can be confirmed, and if the external device is connected, identification information of the external device can be obtained from the external device, and if the external device is an AI processing device 600 based on the identification information, the external device can be selected as an AI processing distributed processing target.

As illustrated in FIG. 8, the on-device AI processing distributed processing device 500 of the present disclosure can be connected to an AI processing device 600, which is an external device, by being combined with it.

The on-device AI processing distributed processing device 500 of the present disclosure may be connected to the AI processing device 600 by wire through the coupling unit 502, or may be configured to be coupled or separated from the AI processing device 600 through the coupling unit of the body itself.

Here, the on-device AI processing distributed processing device 500 of the present disclosure may maintain a communication connection with the external device when the external device is coupled to the coupling unit 502, and may release the communication connection with the external device when the external device is separated from the coupling unit 502.

In addition, as shown in FIG. 9, the on-device AI processing distributed processing device 500 of the present disclosure may be wirelessly connected to the AI processing device 600, which is an external device.

The on-device AI processing distributed processing device 500 of the present disclosure may include a communication unit that is wired or wirelessly connected to the AI processing device 600, which is an external device.

Here, the on-device AI processing distributed processing device 500 of the present disclosure can check whether there is a communication connection with the AI processing device 600, which is an external device, through the communication unit.

In this way, the present disclosure can receive identification information from the external device when it is connected to the AI processing device 600, which is an external device, check whether an AI model identifier exists in the received identification information of the external device, recognize the external device as the AI processing device 600 if the AI model identifier exists, and check whether it is a device capable of AI processing for a user command based on the AI model identifier.

Therefore, the external device of the present disclosure can include an AI processing device 600 in which at least one AI model is stored.

For example, the AI processing device 600 of the external device may include at least one of a battery pack, earphones, external memory, a smart watch, smart glasses, a smart health band, an adapter, a GPS, a PDA, a barcode reader, a character recognition device, and a voice recognition device, in which at least one AI model is stored, but this is only an example and is not limited thereto.

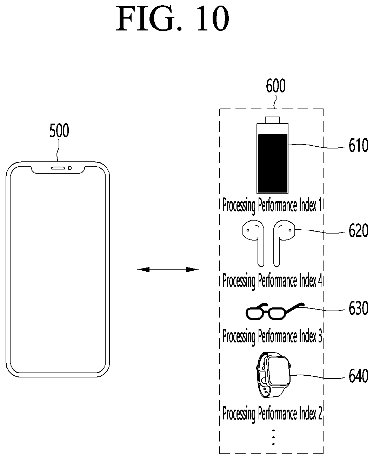

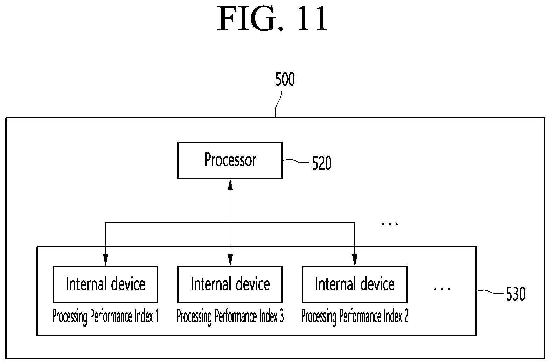

FIG. 10 and FIG. 11 are diagrams for explaining the process of selecting an AI processing distributed processing target of an on-device AI processing distributed processing device according to an embodiment of the present disclosure.

As illustrated in FIG. 10, the on-device AI processing distributed processing device 500 of the present disclosure may check whether or not it is connected to an external device, obtain identification information of the external device from the external device if the external device is connected, check whether the external device is an AI processing device 600 based on the identification information, and select the external device as an AI processing distributed processing target if the external device is an AI processing device 600.

Here, the on-device AI processing distributed processing device 500 of the present disclosure may select all of the external devices capable of AI processing as AI processing distributed processing targets if there are multiple external devices, and may assign priorities to the multiple external devices based on processing performance indices of the multiple external devices selected as AI processing distributed processing targets.

The present disclosure may assign the highest priority to the external device with the highest processing performance indices among the multiple external devices, and may assign the lowest priority to the external device with the lowest processing performance indices.

Here, the processing performance indices of the external devices may be set based on the processing speed, processing time, and processing amount for a predetermined time for performing AI processing.

As an example, the on-device AI processing distributed processing device 500 of the present disclosure may check the processing amount of the external devices for the excess amount when the measured AI processing amount exceeds its own processing amount, and may request processing of the excess amount according to the priorities assigned to the external devices if multiple external devices are required for the excess amount.

Here, in the present disclosure, when the excess amount to be distributed among the AI processing amount is 100, the battery pack 610 with the highest processing performance index among the AI processing devices 600 is selected, the self-processing capacity of the battery pack 610 is checked, and if the self-processing capacity of the battery pack 610 is 60, the smart watch 640 with the second highest processing performance index is additionally selected, the self-processing capacity of the smart watch 640 is checked, and if the self-processing capacity of the smart watch 640 is 40 or more, the excess amount can be requested to be processed to a plurality of AI processing devices 600 including the battery pack 610 and the smart watch 640.

At this time, the present disclosure may additionally select the smart glasses 630 with the third highest processing performance index or the earphones 620 with the fourth highest processing performance index when the self-processing capacity of the smart watch 640 is less than '40'.

The present disclosure may request processing of different excess amounts to multiple external devices when requesting processing of excess amounts.

As an example, the present disclosure may request processing of the first excess amount to an external device with a high priority, and may request processing of the second excess amount, which is the remainder of the total excess amount excluding the first excess amount, to an external device with a low priority.

That is, in the present disclosure, when the excess amount to be distributed among the AI processing amount is `100', the first excess amount, '60', can be requested to be processed by the battery pack 610, which is an external device with a high priority, and the second excess amount, 40, which is the remainder of the total excess amount excluding the first excess amount, 60, can be requested to be processed by the smart watch 640, which is an external device with a low priority.

In some cases, when requesting the processing of the excess amount, the present disclosure may request the same excess amount to be processed by multiple external devices.

As an example, the present disclosure may equally distribute the total excess amount to multiple external devices, request the first excess amount to be processed by the external device with a high priority, and request the second excess amount, which is the same as the first excess amount, to be processed by the external device with a low priority.

That is, in the present disclosure, when the excess amount to be distributedly processed among the AI processing amounts is '100', the battery pack 610, which is an external device with a high priority, can be requested to process the first excess amount, '50', and the smart watch 640, which is an external device with a low priority, can be requested to process the second excess amount, '50', which is the same as the first excess amount.

As illustrated in FIG. 11, the on-deviceAI processing distributed processing device 500 of the present disclosure can check whether an AI processing device 530, which is an internal device capable of AI processing, exists when the external device is not connected, and if the AI processing device 530, which is an internal device capable of AI processing, exists, check whether the AI processing device 530, which is an internal device capable of AI processing, is currently in a non-operation state, and if the AI processing device 530, which is an internal device capable of AI processing, is currently in a non-operation state, select the AI processing device 530, which is an internal device capable of AI processing, as the target of the AI processing distributed processing.

Here, if there are multiple AI processing devices 530 that are internal devices capable of AI processing, the processor 520 may select all of the multiple internal devices as AI processing distributed processing targets, and may assign priorities to the multiple internal devices based on the processing performance indices of the multiple internal devices selected as AI processing distributed processing targets.

For example, the processor 520 may assign the highest priority to the internal device with the highest processing performance indices among the multiple internal devices, and may assign the lowest priority to the internal device with the lowest processing performance indices.

In addition, when the measured AI processing amount exceeds its own processing capacity, the processor 520 may check the processing capacity of the internal devices for the excess amount, and if multiple internal devices are required for the excess amount, may request processing of the excess amount according to the priorities assigned to the internal devices.

Here, when requesting processing of the excess amount, the processor 520 may request different excess amounts to the multiple internal devices.

For example, the processor 520 may request a first excess amount to be processed by an internal device with a high priority, and may request a second excess amount, which is the remainder of the total excess amount excluding the first excess amount, to be processed by an internal device with a low priority.

In some cases, when requesting the processing of excess amounts, the processor 520 may request the same excess amount to be processed by multiple internal devices.

For example, the processor 520 may equally distribute the total excess amount to multiple internal devices, request the first excess amount to be processed by an internal device with a high priority, and request the second excess amount, which is the same as the first excess amount, to an internal device with a low priority.

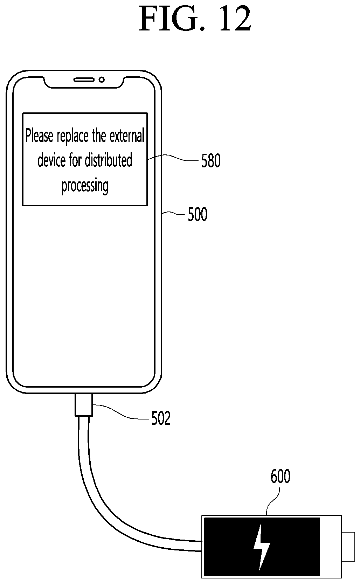

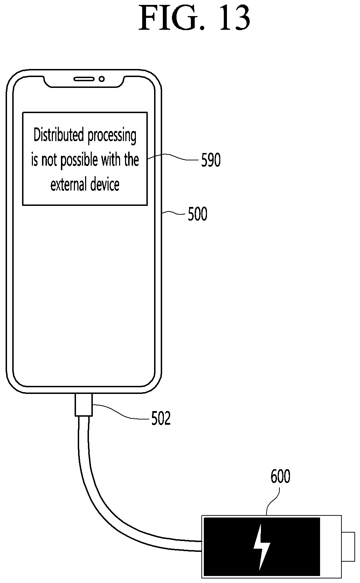

FIG. 12 and FIG. 13 are diagrams for explaining a notification provision process of an on-device AI processing distributed processing device according to an embodiment of the present disclosure.

As illustrated in FIG. 12, the on-device AI processing distributed processing device 500 of the present disclosure receives identification information from an external device when the external device is connected for communication, checks whether an AI model identifier exists in the received identification information of the external device, recognizes the external device as an AI processing device 600 if an AI model identifier exists, and can check whether the device is capable of AI processing for a user command based on the AI model identifier.

Here, the on-device AI processing distributed processing device 500 of the present disclosure recognizes the external device as a general device if an AI model identifier does not exist in the identification information of the external device, and can generate and provide a user notification 580 requesting replacement of the external device.

That is, the present disclosure determines whether an external device is an AI processing device 600 capable of processing AI processing by storing at least one AI model, and if the external device currently connected to the communication is a general device that cannot process AI processing, a message "Please replace the external device for distributed processing" can be generated and displayed on the display screen as a user notification 580.

As an example, the user notification 580 can be generated and output in at least one of a text form and a sound form.

As illustrated in FIG. 13, the AI processing device 600, when mounted on the on-device AI processing distributed processing device 500, performs a communication connection with the on-device AI processing distributed processing device 500, and when connected to the on-device AI processing distributed processing device 500, checks whether a distributed processing request is input from the on-device AI processing distributed processing device 500, extracts distributed processing information from the distributed processing request when a distributed processing request is input from the on-device AI processing distributed processing device 500, and determines whether to perform AI processing based on the distributed processing information.

Here, when the AI processing device 600 determines that AI processing cannot be performed, it can generate and provide a notification to the on-device AI processing distributed processing device 500 informing that distributed processing is impossible.

The AI processing device 600 can check whether an AI model corresponding to a distributed processing request is pre-stored in memory, and if the AI model corresponding to the distributed processing request is not stored in memory, the AI processing device 600 can generate and provide a notification notifying that distributed processing is not possible to the on-device AI processing distributed processing device 500.

As an example, if the AI model corresponding to the distributed processing request is a real-time translation-related AI model, the AI processing device 600 can generate and provide a notification notifying that distributed processing is not possible to the on-device AI processing distributed processing device 500 if the real-time translation-related AI model corresponding to the distributed processing request is not stored in memory.

Therefore, the on-device AI processing distributed processing device 500 can display a user notification 590 notifying that distributed processing is not possible, received from the AI processing device 600, on the display screen.

In some cases, the on-device AI processing distributed processing device 500 may generate a message saying "distributed processing of external device is not possible" and display it on the display screen as a user notification 590 when receiving a distributed processing impossible signal from the AI processing device 600.

As an example, the user notification 590 may be generated and output in at least one of a text form and a sound form.

Meanwhile, the AI processing device 600 of the present disclosure may check whether an AI model corresponding to a distributed processing request is pre-stored in the memory, and if the AI model corresponding to the distributed processing request is not stored in the memory, the AI model required may be acquired from an external server through a communication unit and stored in the memory.

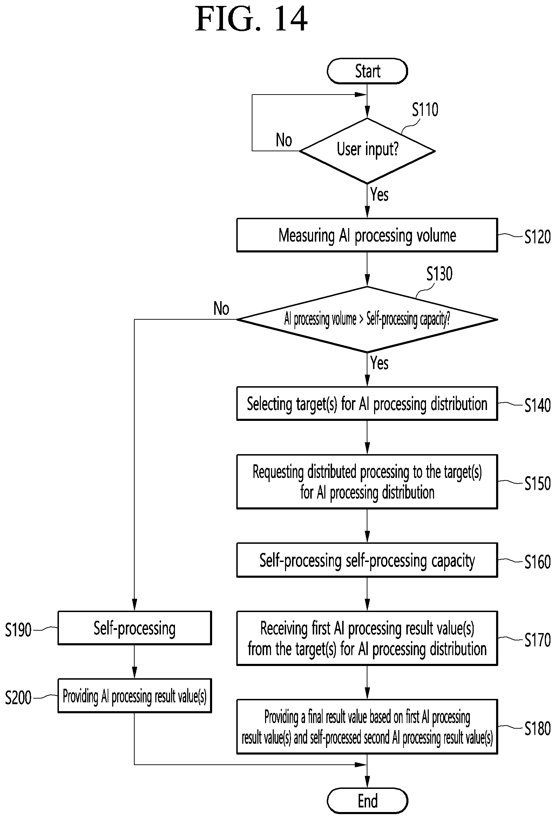

FIG. 14 is a diagram for explaining an AI processing distributed processing method of an on-device AI processing distributed processing device according to an embodiment of the present disclosure.

As illustrated in FIG. 14, the on-device AI processing distributed processing device of the present disclosure may check whether a user command is input (S110).

In addition, the present disclosure may measure the amount of AI processing for performing the user command when a user command is input (S120).

Here, the present disclosure may select at least one AI model for performing the user command when a user command is input, and measure the amount of AI processing for performing the user command based on the amount of computation of the selected AI model.

Next, the present disclosure can check whether the measured AI processing amount exceeds the self-processing amount (S130).

Here, the present disclosure can self-process the AI processing amount corresponding to the user command if the AI processing amount is less than the self-processing amount (S190) and generate and provide the AI processing result value (S200).

Next, the present disclosure can select an AI processing distribution processing target if the measured AI processing amount exceeds the self-processing amount (S140).

Here, the present disclosure can check whether there is a connection with an external device, obtain identification information of the external device from the external device if the external device is connected, and check whether the external device is an AI processing device based on the identification information, and select the external device as an AI processing distribution processing target if the external device is an AI processing device.

In addition, the present disclosure can check whether an internal device capable of AI processing exists when an external device is not connected, and if an internal device capable of AI processing exists, check whether the internal device capable of AI processing is currently in a non-operational state, and if the internal device capable of AI processing is currently in a non-operational state, the internal device capable of AI processing can be selected as an AI processing distributed processing target.

In addition, the present disclosure can request AI processing to be distributed to the selected AI processing distributed processing target (S150).

Here, the present disclosure can calculate an excess amount in addition to the self-processable amount among the measured AI processing amounts, check the processable amount of the selected AI processing distributed processing target, and if the processable amount of the AI processing distributed processing target is greater than the excess amount, request AI processing to be distributed to the AI processing distributed processing target for the excess amount.

In addition, the present disclosure can additionally select another AI processing distributed processing target and request AI processing to be distributed to multiple AI processing distributed processing targets for the excess amount if the processable amount of the AI processing distributed processing target is less than the excess amount.

Next, the present disclosure can self-process AI processing for the self-processable amount among the AI processing amounts (S160).

Next, the present disclosure can receive a first AI processing result value from an AI processing distributed processing target (S170).

And, the present disclosure can provide a final result value based on the received first AI processing result value and the self-processed second AI processing result value (S180).

Here, the present disclosure can generate a final result value corresponding to a user command by mapping the first AI processing result value received from the AI processing distributed processing target and the self-processed second AI processing result value to each other.

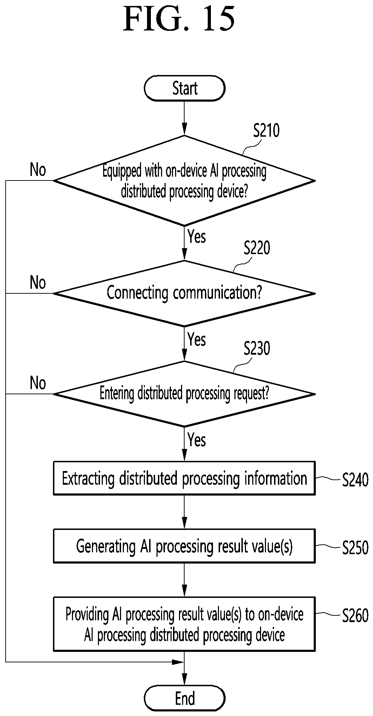

FIG. 15 is a drawing for explaining an AI processing distributed processing method of an AI processing device detachable from an on-device AI processing distributed processing device according to an embodiment of the present disclosure.

As shown in FIG. 15, the AI processing device of the present disclosure can confirm whether it is mounted on an on-device AI processing distributed processing device (S210).

Then, the present disclosure can confirm whether it is connected to the on-device AI processing distributed processing device when it is mounted on the on-device AI processing distributed processing device (S220).

Next, the present disclosure can confirm whether a distributed processing request is input from the on-device AI processing distributed processing device when it is connected to the on-device AI processing distributed processing device (S230).

Next, the present disclosure can extract distributed processing information from the distributed processing request when a distributed processing request is input from the on-device AI processing distributed processing device (S240).

Here, the present disclosure can extract distributed processing information including AI model information, location information, distributed processing amount information, and input data corresponding to the distributed processing portion from the distributed processing request.

And, the present disclosure can generate an AI processing result value by performing AI processing based on distributed processing information (S250).

Here, the present disclosure can check whether an AI model corresponding to a distributed processing request is pre-stored in memory when performing AI processing, and if the AI model corresponding to the distributed processing request is not stored in memory, the necessary AI model can be acquired from an external server through a communication unit and stored in memory.

In some cases, the present disclosure can check whether an AI model corresponding to a distributed processing request is pre-stored in memory when performing AI processing, and if the AI model corresponding to the distributed processing request is not stored in memory, the present disclosure can generate and provide a notification notifying that distributed processing is not possible to an on-device AI processing distributed processing device.

Next, the present disclosure can provide the generated AI processing result value to the on-device AI processing distributed processing device (S260).

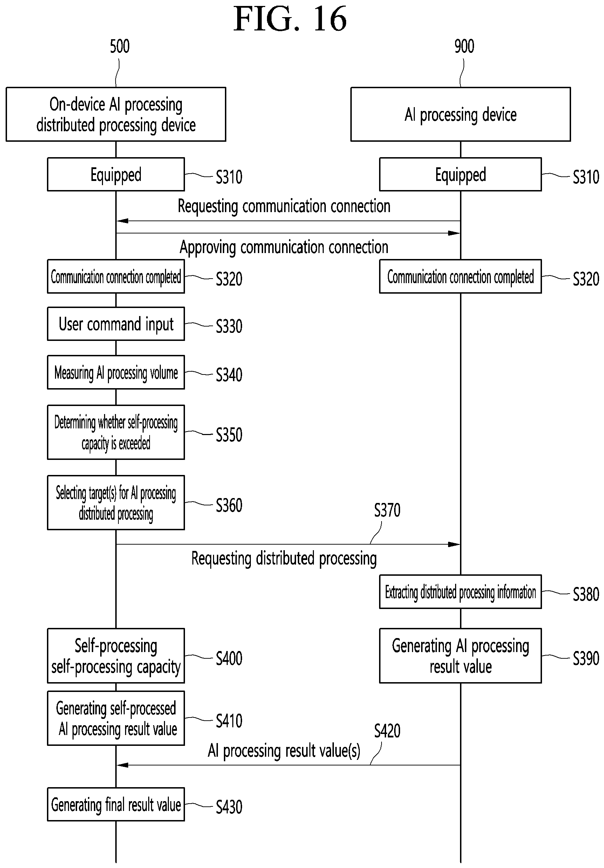

FIG. 16 is a diagram for explaining the overall operation flow of an on-device AI processing distributed processing system according to an embodiment of the present disclosure.

As illustrated in FIG. 16, the on-device AI processing distributed processing system of the present disclosure may include an on-device AI processing distributed processing device 500 that performs AI processing corresponding to a user command, and an AI processing device 900 that performs AI processing corresponding to a distributed processing request of the on-device AI processing distributed processing device 500.

First, the AI processing device 900 may be mounted on the on-device AI processing distributed processing device 500 and coupled with each other (S310).

Here, the on-device AI processing distributed processing device 500 may store at least one AI model, and the AI processing device 900 may store at least one AI model among AI models pre-stored in the on-device AI processing distributed processing device 500.

Next, the AI processing device 900 requests a communication connection to the on-device AI processing distributed processing device 500, and the on-device AI processing distributed processing device 500 approves the communication connection in response to the communication connection request of the AI processing device 900, so that the AI processing device 900 and the on-device AI processing distributed processing device 500 can be connected to each other for communication (S320).

Next, the on-device AI processing distributed processing device 500 can receive a user command requesting a specific service, such as a real-time translation service (S330).

Then, when a user command is input, the on-device AI processing distributed processing device 500 can measure the amount of AI processing to perform the user command (S340).

Here, the on-device AI processing distributed processing device 500 can select at least one AI model for performing the user command when a user command is input, and measure the amount of AI processing for performing the user command based on the computational amount of the selected AI model.

As an example, if the user command is a request for a real-time translation service, the on-device AI processing distributed processing device 500 can select at least one AI model for performing real-time translation-related AI processing, and measure the amount of AI processing based on the computational amount of the AI model performing real-time translation-related AI processing.

Next, the on-device AI processing distributed processing device 500 can determine whether the measured AI processing amount exceeds the self-processing amount (S350).

Here, the on-device AI processing distributed processing device 500 can determine whether there is AI processing currently in operation when the AI processing amount is measured, calculate the self-processing amount excluding the AI processing currently in operation if there is AI processing currently in operation, and determine whether the measured AI processing amount is the self-processing amount based on the calculated self-processing amount.

In some cases, the on-device AI processing distributed processing device 500 can determine whether there is a preset self-processing amount when the AI processing amount is measured, and determine whether the measured AI processing amount is the self-processing amount based on the preset self-processing amount if there is a preset self-processing amount.

For example, the preset self-processing amount can be a preset default value or a user value preset by a user.

Next, the on-device AI processing distributed processing device 500 can select an AI processing distributed processing target if the measured AI processing amount exceeds its own processing capacity (S360).

Here, the on-device AI processing distributed processing device 500 can obtain identification information of the AI processing device 900 and select the AI processing device 900 as an AI processing distributed processing target based on this.

Then, the on-device AI processing distributed processing device 500 can request AI processing distributed processing to the AI processing distributed processing target 900 (S370).

Next, when a distributed processing request is input from the on-device AI processing distributed processing device 500, the AI processing device 900 can extract distributed processing information from the distributed processing request (S380).

Here, the AI processing device 900 can extract distributed processing information including AI model information, location information, distributed processing amount information, and input data corresponding to the distributed processing portion from the distributed processing request.

Then, the AI processing device 900 can perform AI processing based on the distributed processing information to generate an AI processing result value (S390).

Here, the AI processing device 900, when performing AI processing, checks whether an AI model corresponding to the distributed processing request is already stored in the memory, and if the AI model corresponding to the distributed processing request is not stored in the memory, can obtain the necessary AI model from an external server through the communication unit and store it in the memory.

Meanwhile, the on-device AI processing distributed processing device 500 can self-process AI processing for the self-processable amount among the AI processing amount (S400).

Then, the on-device AI processing distributed processing device 500 can generate an AI processing result value that has been self-processed (S410).

Next, the on-device AI processing distributed processing device 500 can receive an AI processing result value from the AI processing device 900 (S420).

Next, the on-device AI processing distributed processing device 500 can generate a final result value based on the AI processing result value received from the AI processing device 900 and the second AI processing result value processed by itself (S430).

Here, the on-device AI processing distributed processing device 500 can map the AI processing result value received from the AI processing device 900 and the second AI processing result value processed by itself to generate a final result value corresponding to the user command.

Meanwhile, as another embodiment, the on-device AI processing distributed processing system of the present disclosure can simultaneously request distributed processing of AI processing to an internal device and an external device.

The on-device AI processing distributed processing system of the present disclosure may include an on-device AI processing distributed processing device that performs AI processing corresponding to a user command, a first AI processing device that is arranged inside the on-device AI processing distributed processing device and performs first AI processing corresponding to a distributed processing request of the on-device AI processing distributed processing device, and a second AI processing device that is arranged outside the on-device AI processing distributed processing device and performs second AI processing corresponding to a distributed processing request of the on-device AI processing distributed processing device.

Here, the on-device AI processing distributed processing device measures an AI processing amount for performing the user command when a user command is input, and if the measured AI processing amount exceeds its own processing capacity, simultaneously requests distributed processing of AI processing to the first AI processing device and the second AI processing device, and if a first AI processing result value is received from the first AI processing device and a second AI processing result value is received from the second AI processing device, the final result value may be provided based on the first AI processing result value, the second AI processing result value, and the third AI processing result value that has been processed by itself.

And, the on-device AI processing distributed processing device can store at least one AI model, and the first AI processing device and the second AI processing device can store at least one AI model among the AI models pre-stored in the on-device AI processing distributed processing device.

Then, when a distributed processing request is input from the on-device AI processing distributed processing device, the first AI processing device extracts distributed processing information from the distributed processing request, performs AI processing based on the distributed processing information to generate a first AI processing result value, and provides the generated first AI processing result value to the on-device AI processing distributed processing device.

In addition, the second AI processing device performs a communication connection with the on-device AI processing distributed processing device, and when the communication connection is made with the on-device AI processing distributed processing device, checks whether a distributed processing request is input from the on-device AI processing distributed processing device, extracts distributed processing information from the distributed processing request when a distributed processing request is input from the on-device AI processing distributed processing device, performs AI processing based on the distributed processing information to generate a second AI processing result value, and provides the generated second AI processing result value to the on-device AI processing distributed processing device.

Next, when requesting distributed processing of AI processing, the on-device AI processing distributed processing device checks whether both the first AI processing device and the second AI processing device are AI processing devices, and if both the first AI processing device and the second AI processing device are AI processing devices, can simultaneously request distributed processing of AI processing to the first AI processing device and the second AI processing device.

Here, when confirming whether the on-device AI processing distributed processing device is an AI processing device, it obtains identification information from each of the first AI processing device and the second AI processing device, confirms whether an AI model identifier exists in the identification information, and if an AI model identifier exists, recognizes the first AI processing device and the second AI processing device as AI processing devices, and confirms whether the device is capable of AI processing for a user command based on the AI model identifier.

In addition, when requesting distributed processing of AI processing, the on-device AI processing distributed processing device can confirm the processing capacity of the first AI processing device and the second AI processing device, distribute the excess amount based on the processing capacity of the first AI processing device and the second AI processing device, and allocate the distribution amount, and request distributed processing to the first AI processing device and the second AI processing device to perform distributed processing for each of the allocated distribution amounts.

Here, the on-device AI processing distributed processing device can check the priorities assigned to the first AI processing device and the second AI processing device when distributing the excess amount, and distribute the excess amount in accordance with the priorities.

For example, the on-device AI processing distributed processing device can obtain processing performance indices from the first AI processing device and the second AI processing device, and assign priorities to the first AI processing device and the second AI processing device based on the processing performance indices.

That is, the on-device AI processing distributed processing device can assign a high priority to a device with higher processing performance indices among the first AI processing device and the second AI processing device.

Next, the on-device AI processing distributed processing device can distribute the excess amount in accordance with the priorities assigned to the first AI processing device and the second AI processing device when distributing the excess amount.

Here, when distributing the excess, the on-device Al processing distributed processing device may allocate the first distribution amount of the total excess to the device with the highest priority among the first AI processing device and the second AI processing device, and allocate the second distribution amount, excluding the first distribution amount of the total excess, to the device with the lowest priority.

In some cases, when distributing the excess, the on-device AI processing distributed processing device may equally distribute the excess and allocate the first distribution amount of the total excess to the first AI processing device, and allocate the second distribution amount having the same amount as the first distribution amount of the total excess to the second AI processing device.

In other cases, when distributing the excess, the on-device AI processing distributed processing device may allocate the first distribution amount of the total excess to the first AI processing device, and allocate the first distribution amount of the total excess to the second AI processing device.

Then, the second AI processing device performs a communication connection with the on-device AI processing distributed processing device, and when the communication connection with the on-device AI processing distributed processing device is established, it checks whether a distributed processing request is input from the on-device AI processing distributed processing device, and when a distributed processing request is input from the on-device AI processing distributed processing device, it extracts distributed processing information from the distributed processing request, performs AI processing based on the distributed processing information to generate a second AI processing result value, and provides the generated second AI processing result value to the on-device AI processing distributed processing device.

In this way, the present disclosure can improve the AI processing speed and the accuracy of the result value and the service quality of the terminal by selecting an AI processing distributed processing target located externally or internally and requesting distributed processing of AI processing when the amount of AI processing for performing a user command exceeds the amount that can be processed by the user.

In addition, the present disclosure can minimize power consumption of a terminal and improve performance and lifespan by distributing AI processing with an AI processing distributed processing target located externally or internally, thereby reducing heat generation.

The above-described present disclosure can be implemented as a computer-readable code on a medium in which a program is recorded. The computer-readable medium includes all types of recording devices in which data that can be read by a computer system is stored. Examples of the computer-readable medium include a hard disk drive (HDD), a solid-state disk (SSD), a silicon disk drive (SDD), a ROM, a RAM, a CD-ROM, a magnetic tape, a floppy disk, an optical data storage device, and the like. In addition, the computer may include a processor of an artificial intelligence device.

## Claims

1. An on-device artificial intelligence (Al) processing distributed processing device comprising:
an input module configured to receive a user command; and
a processor configured to perform AI processing corresponding to the user command,
wherein, the processor is configured to:
after the user command is received, measure an amount of AI processing for performing the user command,
select an AI processing distributed processing target as a result of the measured amount of AI processing exceeding a self-processing capacity,
request distributed processing for AI processing from the selected AI processing distributed processing target,
receive a first AI processing result value from the AI processing distributed processing target, and
after the first AI processing result value is received from the AI processing distributed processing target, provide a final result value based on the first AI processing result value and a self-processed second AI processing result value.

2. The on-device AI processing distributed processing device of claim 1, wherein measuring the amount of AI processing comprises selecting at least one AI model for performing the user command in response to the received user command, and measuring the amount of AI processing for performing the user command based on a computational amount of the selected at least one AI model.

3. The on-device AI processing distributed processing device of claim 2, wherein measuring the amount of AI processing comprises:
selecting one AI model for performing the user command, and measuring the amount of AI processing based on the computational amount capable of being processed by the one AI model, or
selecting multiple AI models for performing the user command, and measuring the amount of AI processing based on a total computational amount capable of being processed by the multiple AI models.

4. The on-device AI processing distributed processing device of any of the preceding claims, wherein the processor is configured to determine whether the measured amount of AI processing is a self-processable amount, and wherein the AI processing distributed processing target is selected as a result of determining that the measured amount of AI processing exceeds the self-processable amount.

5. The on-device AI processing distributed processing device of claim 4, wherein the processor is configured to:
determine whether an internal device capable of AI processing exists,
determine whether the internal device capable of AI processing is currently in a non-operating state as a result of determining that the internal device capable of AI processing exists, and
select the internal device capable of AI processing as the AI processing distributed processing target as a result of determining that the internal device capable of AI processing is currently in the non-operating state.

6. The on-device AI processing distributed processing device of any of the preceding claims, wherein the processor is configured to:
calculate an excess amount of processing, wherein the excess amount of processing is a difference between a self-processable amount and the the measured AI processing amount,
check an amount capable of being processed by the selected AI processing distributed processing target, and
request distributed processing of AI processing for the excess amount of processing to the AI processing distributed processing target as a result of the amount capable of being processed the AI processing distributed processing target being greater than the excess amount of processing.

7. The on-device AI processing distributed processing device of any of the preceding claims, wherein providing the final result value comprises generating the final result value corresponding to the user command by mapping the first AI processing result value received from the AI processing distributed processing target to the second AI processing result value processed.

8. An artificial intelligence (Al) processing device detachable from an on-device AI processing distributed processing device, comprising:
a communication module being communicatively connected to the on-device AI processing distributed processing device;
a memory storing at least one Al model for AI processing; and
a processor configured to perform AI processing corresponding to a distributed processing request of the on-device AI processing distributed processing device, wherein the processor is configured to:
perform a communication connection with the on-device AI processing distributed processing device, wherein the AI processing device is mounted on the on-device AI processing distributed processing device,
determine that the distributed processing request is received from the on-device AI processing distributed processing device after the AI processing device is connected with the on-device AI processing distributed processing device,
extract distributed processing information from the distributed processing request after the distributed processing request is received from the on-device AI processing distributed processing device,
generate an AI processing result value by performing AI processing based on the distributed processing information, and
provide the generated AI processing result value to the on-device AI processing distributed processing device.

9. The AI processing device of claim 8, wherein extracting the distributed processing information comprises extracting the distributed processing information including AI model information, location information, distributed processing amount information, and input data corresponding to a distributed processing portion from the distributed processing request.

10. The AI processing device of claim 8 or 9, wherein performing the AI processing comprises determining whether an AI model corresponding to the distributed processing request is pre-stored in the memory, and storing the AI model in the memory by obtaining the AI model from an external server through the communication module as a result of determining that the AI model corresponding to the distributed processing request is not stored in the memory.

11. The AI processing device of any of claims 8 to 10, wherein performing the AI processing comprises determining whether an AI model corresponding to the distributed processing request is pre-stored in the memory, and generating and providing a notification notifying that distributed processing is not possible to the on-device AI processing distributed processing device as a result of determining that the AI model corresponding to the distributed processing request is not stored in the memory.
